Europäisches Patentamt

European Patent Office

Office européen des brevets

(11) Publication number: **0 085 361**
**B1**

## (12) EUROPEAN PATENT SPECIFICATION

(45) Date of publication of patent specification: **09.12.87**

(21) Application number: **83100482.5**

(22) Date of filing: **20.01.83**

(51) Int. Cl.⁴: **F 16 D 65/12**

(54) **Disk brake.**

(30) Priority: **02.02.82 IT 1941182**

(43) Date of publication of application:
**10.08.83 Bulletin 83/32**

(45) Publication of the grant of the patent:
**09.12.87 Bulletin 87/50**

(84) Designated Contracting States:
**AT BE CH DE FR GB LI NL SE**

(56) References cited:
**DD-A- 140 577**
**DE-A-2 545 544**
**DE-A-2 733 224**

(73) Proprietor: **INNOCENTE RIGANTI OFFICINE
MECCANICHE S.p.A.**
**1 via Vittorio Veneto**
**I-21048 Solbiate Arno (IT)**

(72) Inventor: **Innocente, Riganti**
**1, Via Vittorio Veneto**
**I-21048 Solbiate Arno (VA) (IT)**

(74) Representative: **Ferraiolo, Ruggero**
**Via Napo Torriani, 10**
**I-20124 Milano (IT)**

Courier Press, Leamington Spa, England.

## Description

This invention relates to a disk brake designed especially for railway vehicles, comprising a hub peripherically carrying a number of radial extensions and comprising a double-walled circle ring-shaped disk, the aforementioned walls defining, on the inside, some open radial ducts and, on the outside, two surfaces designed to be tightened by the brake lining supports (hereinafter referred to simply as supports) of a braking system, the disk being made up of at least two parts of a circle ring and being provided with a number of radial extensions connected with the radial extensions of the hub. The hub is usually shrinked onto a driving axle or onto a neutral axle.

In the following specification the hub and disk as defined hereabove shall be referred to simply as -hub- and -disk- respectively.

There are various types of disk brakes currently employed for railway vehicles: the brake described in DE—A—2 733 224 where the disk is composed of two separate mutually opposed circle rings, divided into at least two parts, the mutually opposed surfaces carrying a number of extensions designed to engage an equal number of corresponding slots produced in the hub, the parts of the mutually opposed circle rings being urged to each other by means of suitable members which are also designed to secure the disk onto the hub both radially and axially; the brake described in the Italian patent N. 1,052,464 where the disk is composed of four semicircular parts of a ring that are directly secured, in pairs, to the lateral surfaces of a rotor or of a wheel which is fixed to the respective axle.

In the first of the aforementioned brakes the members securing the disk to the hub prevent a certain portion of the disk surface from sliding radially with respect to the hub when the disk itself runs hot as a result of braking action since the aforementioned fixing members are located in the area where the abovementioned supports operate; in addition, the particular construction of this brake is rather complex; in the second of the aforementioned brakes two disks are mounted on the surfaces of a wheel or of a rotor, namely since there is no space for the circulation of air between the disk, a considerable thermal gradient is generated in the material while braking and, as the disks are secured to the wheel or rotor through relatively rigid couplings, the mechanical tensions produced by the thermal gradient bring the material under considerable strain, limiting the life span of the material itself. A disk brake according to the first part of the claim is known from DD—A—140 577.

The brake developed in accordance with this invention, as characterized in the claim, conventionally comprises a hub carrying a plurality of equally spaced radial hub extensions and a ring-shaped disk comprising two spaced walls which are connected by means of radial ribs defining some open radial ducts for air circulation, said disk carrying a plurality of equally spaced radial disk extensions, where each hub extension has a recess and each disk extension has a slot in which recesses and slots pin-shaped members are arranged and in a new way the ring-shaped disk is formed by at least two enblock units connected together, each unit comprising said two spaced walls, each of said walls carrying one disk extension comprising said slot, a pin being forced in each recess and both ends of said pin being engaged in the slots so as to be slidable radially within the slots when said disk undergoes thermal expension due to the braking.

The advantage afforded by this invention lies in the fact that, although the radial thermal expansion of the disk is allowed with respect to the hub, the steadiness of the disk on the hub in the tangential direction is ensured without any undesired clearance.

One way of carrying out the invention is described in detail below with reference to the enclosed drawings, which illustrate only one specific embodiment, in which:

Fig. 1 is a front view of the assembly, partly in section through A—A of Fig. 2, featuring a brake hub and disk designed in accordance with a preferred embodiment.

Fig. 2 is a scrap side view, partly in section through B—B of Fig. 1.

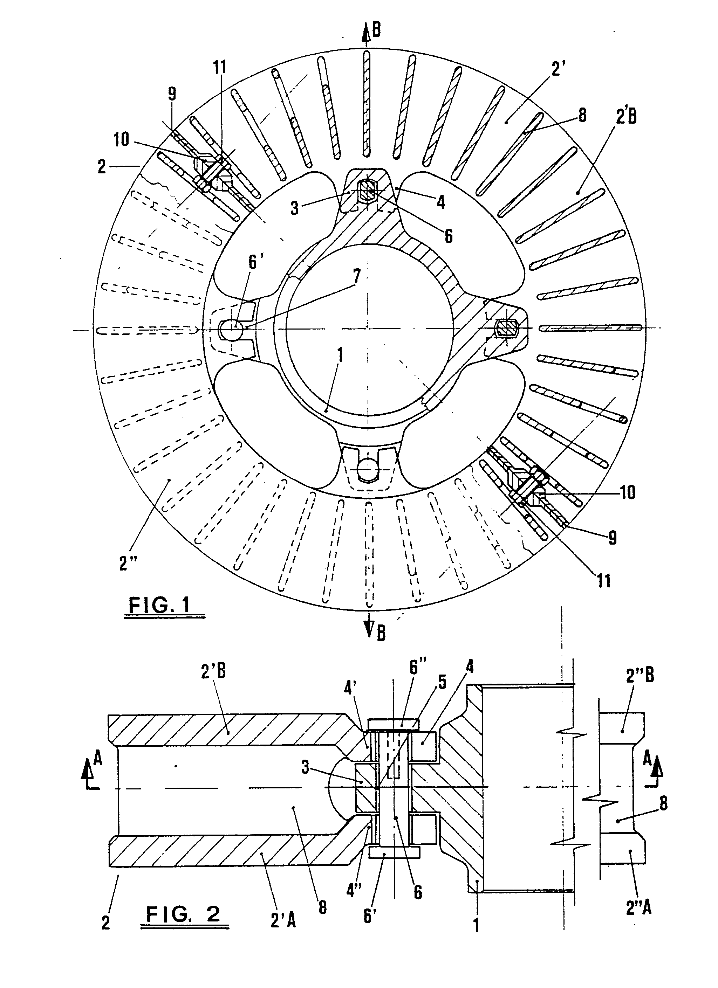

With reference to Figs. 1 and 2, the disk brake comprises a hub 1 and a disk 2, defined by two half-parts of a circle ring 2' and 2'' each covering 180° of the circle ring, each hub and each disk carrying four corresponding radial extensions 3, 4 respectively, two radial extensions for each half-part, the radial extensions 4 of the disk comprising, in turn, two members 4', 4'' facing each other with a gap between them designed to house, without any considerable clearance, a corresponding extension 3 of the hub. Each extension 3 of the hub is provided with a recess 5 in which a pin 6 is forced, fixed by a head 6' and a screw 6'' which is screwed down into a parallel hole within pin 6, said pin being long enough to enter into slot 7 of extension 4, slot 7 being located at the end which is adjacent to hub 1. Each of the two parts of the circle ring 2', 2'' comprises two half-parts (2'A, 2'B and 2''A, 2''B) which have a gap between them in the circle ring area and are, instead, brought together in the area of extension 4, ribs 8 stretching out radially across the space comprised between the two half-parts, from one face to the other. Each of the two parts 2', 2'' is obtained, together with the relevant ribs 8, from an iron casting. Moreover, each of the two parts 2', 2'' carries, in the area of contact 9 with the other part, a special rib 10 provided with a hole for through bolt 11 which is designed to clamp the two aforementioned parts together. As they approach said special ribs 10, the normal ribs 8 are radially reduced or are provided with an opening for the insertion of bolt 11 and of a wrench for tightening the respective nut. Each half-part 2', 2'' of disk 2 comprises two radial extensions 4 with a 90° gap between them and a 45° gap from the base diameter. Pin 6 is provided with a substantially rectangular cross section so that it may rest on broad lateral supporting surfaces and may, thus, uniformly transmit any compressive stress to the members against which it rests while the brake is operated.

## Claim

A disk brake for the wheels of a railway vehicle comprising a hub (1) carrying a plurality of equally spaced radial hub extensions (3) and a ring-shaped disk (2) comprising two spaced walls (2'A, 2'B) which are connected by means of radial ribs (8) defining some open radial ducts, said disk (2) carrying a plurality of equally spaced radial disk extensions (4), where each hub extension (3) has a recess (5) and each disk extension (4) has a slot (7), in which recesses (5) and slots (7) pin-shaped members are arranged, characterized in that the ring-shaped disk (2) is formed by at least two enblock units (2', 2'') connected together, each unit comprising said two spaced walls, each of said walls carrying one disk extension (4', 4'') comprising said slot, a pin (6) being forced in each recess (5) and both ends of said pin being engaged in the slots (7) so as to be slidable radially within the slots.

## Patentanspruch

Scheibenbremse für die Räder eines Eisenbahnfahrzeuges, welche eine Nabe (1), die eine Mehrzahl von voneinander im gleichen Abstand befindlichen Nabenfortsätzen (3) trägt, und eine ringförmige Scheibe (2) aufweist, welche zwei voneinander im Abstand befindliche Wandungen (2'A, 2'B) aufweist, welche mittels radialer Rippen (8), die einige offene radiale Kanäle begrenzen, verbunden sind, wobei die Scheibe (2) eine Mehrzahl von voneinander im gleichen Abstand befindlichen radialen Scheibenfortsätzen (4) trägt, wo jeder Nabenfortsatz (3) eine Ausnehmung (5) hat und jeder Scheibenfortsatz (4) einen Schlitz (7) aufweist, in welchen Ausnehmungen (5) und Schlitzen (7) bolzenförmige Bauteile angeordnet sind, dadurch gekennzeichnet, daß die ringförmige Scheibe (2) aus mindestens zwei miteinander verbundenen Blockeinheiten (2', 2'') gebildet ist, wobei jede Einheit die zwei voneinander im Abstand befindlichen Wandungen aufweist, wobei jede der Wandungen einen Scheibenfortsatz (4', 4''), der den Schlitz aufweist, trägt, wobei ein Bolzen (6) in jede Ausnehmung (5) getrieben ist und wobei dessen beide Enden in den Schlitzen (7) so eingesetzt sind, daß sie in den Schlitzen radial gleitbar sind.

## Revendication

1. Frein à disque pour les roues d'un véhicule ferroviaire, comprenant un moyeu (1) portant de multiples prolongements radiaux (3) de moyeu uniformément espacés et un disque annulaire (2) comprenant deux parois espacées (2'A, 2'B) qui sont reliées au moyen de nervures radiales (8) définissant des conduits radiaux ouverts, le disque (2) portant de multiples prolongements radiaux (4) de disque uniformément espacés, où chaque prolongement (3) de moyeu a un évidement (5) et chaque prolongement (4) de disque a une fente (7), des organes en forme de broche étant disposés dans lesdits évidements (5) et fentes (7), caractérisé par le fait que le disque annulaire (2) est formé par au moins deux unités (2', 2'') de bloc terminal reliées ensemble, chaque unité comprenant les deux parois espacées, chacune de ces parois portant un prolongement de disque (4', 4'') comprenant la fente, une broche (6) étant enfoncée dans chaque évidement (5) et les deux extrémités de cette broche étant engagées dans les fentes (7) de manière à pouvoir coulisser radialement à l'intérieur des fentes.

0 085 361

FIG. 1

FIG. 2